# EUROPEAN PATENT SPECIFICATION

(11) **EP 3 647 884 B1**
(45) Date of publication and mention of the grant of the patent: **13.04.2022**
(21) Application number: 17916318.3
(22) Date of filing: 30.06.2017
(51) Int. Cl.: G04F 10/00

(54) **CIRCUIT, METHOD AND RELATED CHIP FOR TIME MEASUREMENT, SYSTEM, AND DEVICE**
SCHALTUNG, VERFAHREN UND ZUGEHÖRIGER CHIP ZUR ZEITMESSUNG, SYSTEM UND VORRICHTUNG
CIRCUIT, PROCÉDÉ ET PUCE CONNEXE POUR LA MESURE DU TEMPS, SYSTÈME, ET DISPOSITIF

(43) Date of publication of application: 06.05.2020
(73) Proprietor: SZ DJI Technology Co., Ltd., Shenzhen, Guangdong 518057 (CN)
(72) Inventor: GAO, Mingming, Shenzhen, Guangdong 518057 (CN); YANG, Kang, Shenzhen, Guangdong 518057 (CN); LIU, Xiang, Shenzhen, Guangdong 518057 (CN)
(74) Representative: Appelt, Christian W.
(86) International application number: PCT/CN2017/091048
(87) International publication number: WO 2019/000373

(56) References cited:
- WO-A1-2009/021186
- CN-A- 1 214 478
- CN-A- 102 882 527
- CN-A- 104 216 279
- CN-A- 104 714 403
- US-A1- 2002 093 445
- US-A1- 2007 280 054
- US-A1- 2007 280 054
- US-B1- 8 558 728

## Description

### TECHNICAL FIELD

The present disclosure relates to the field of time measurement and, more particularly, to a circuit and a method for measuring time, and a related chip, system, and device.

### BACKGROUND

A laser radar system, also known as a light detection and ranging (LiDAR) system, is a system for perceiving an outside world. A detection process of the LiDAR system primarily includes: transmitting a laser signal (e.g., a laser pulse signal); detecting a reflected signal of the transmitted laser signal; and based on a time difference between the transmitted laser signal and received reflected signal, determining a distance of a measured object. Further, the LiDAR system may also reconstruct three-dimensional information of the measured object by combining information such as a transmitting angle of the laser signal. Compared with planar sensing systems such as cameras, the LiDAR system may perceive the three-dimensional information of the outside world. Thus, the LiDAR system is more and more widely used.

After the LiDAR system receives the reflected signal of the transmitted laser signal, a time-to-digital converter (TDC) is required to measure a receiving time of the reflected signal. The receiving time of the reflected signal is compared with the transmitting time of the laser signal to determine the distance of the measured object.

The dimension of the TDC in the conventional LiDAR system is relatively large and is limiting applicable scenes for the LiDAR system.

WO 2009/021186 A1 discloses that in an embodiment, a method is disclosed that includes receiving a clock signal at a delay chain of a circuit device and determining a value of the clock signal at a selected point within the delay chain. The method also includes adjusting the selected point when the value does not indicate detection of an edge of the clock signal.

US 2007/280054 A1 discloses that in a time measuring circuit, a pulse delay circuit is provided with a plurality of delay units. The pulse delay circuit is configured to transfer a pulse signal through the plurality of delay units while the pulse signal is delayed by the plurality of delay units. A delay time of each of the plurality of delay units depends on a level of a first drive voltage being input to each of the plurality of delay units. A generating circuit is configured to obtain a number of the delay units through which the pulse signal has passed within a predetermined period to generate, as time measurement data, digital data based on the obtained number. A first setting unit is configured to variably set the level of the first drive voltage being input to each of the plurality of delay units.

US 2002/093445 A1 discloses: An analog input signal is inputted into a pulse delay circuit including a series combination of delay units. The analog input signal controls signal delay times provided by the respective delay units. A pulse signal is inputted into the pulse delay circuit. The pulse signal is transmitted in the pulse delay circuit while being sequentially delayed by the delay units. Detection is made as to a number of ones among the delay units through which the pulse signal has passed during a setting time from a moment at which the pulse signal is inputted into the pulse delay circuit. Information representative of a level of the analog input signal is generated in response to the detected number.

US 8,558,728 B1 discloses: Phase noise in a first clock signal is measured using a time to digital converter (TDC) by determining variations in the phase delay between the first clock signal and a second clock signal. The TDC can include first and second series interconnections of delay elements, first and second sets of latches, and processing circuitry coupled to the latches and configured to determine the phase delay. The TDC can include a series interconnection of delay elements, latches, and circuitry configured to selectively adjust the control signal connected to the delay elements based on the output of the latches. The phase noise measurement can be used in a sampling circuit, so as to produce a second data signal from a first data signal based on the first clock signal and the measured phase noise.

### SUMMARY

The present disclosure provides a circuit and a method for measuring time, and a related chip, system, and device to reduce the dimension of the LiDAR system.

A first aspect provides a time measurement circuit including: a signal input configured to receive a to-be-tested signal; a delay line including n delay units, a first delay unit of the delay linebeing connected to the signal input to receive the to-be-tested signal from the signal input, the delay line being configured to sequentially transmit a first rising edge of the to-be-tested signal received at the first delay unit from the first delay unit to an n-th delay unit of the delay line in response to the to-be-tested signal being received by the first delay unit, and n being a positive integer larger than two; and a latch connected to the n delay units and configured to latch output signals of the n delay units, wherein the time measurement circuit further comprises a logic controller including an input connected to the signal input to receive the to-be-tested signal and an output connected to a k-th delay unit of the delay line, the logic controller being configured to send a second rising edge received at the input of the logic controller to the k-th delay unit and to have the delay line sequentially transmit the second rising edge from the k-th delay unit to the n-th delay unit of the delay line in response to the to-be-tested signal being received at the input of the logic controller, and to send a low-level signal to the k-th delay unit and to have the delay line sequentially transmit the low-level signal from the k-th delay unit to the n-th delay unit of the delay line after the second rising edge is transmitted to the k-th delay unit and before the first rising edge arrives at the k-th delay unit, and 1<k<n.

A second aspect provides a time measurement chip including: the time measurement circuit of the first aspect; a processing circuit connected to the latch of the time measurement circuit and configured to determine a time at which the signal input receives the to-be-tested signal according to states of output signals of the n delay units stored in the latch.

A third aspect provides a light detection and ranging (LiDAR) system including: a transmitter configured to transmit a laser signal; a receiver configured to receive a reflected signal corresponding to the transmitted laser signal, the reflected signal being an analog signal; the time measurement chip of the second aspect. The time measurement chip further includes: a conversion circuit connected to the time measurement circuit and configured to convert an analog signal to the to-be-tested signal in a pulse form and transmit the to-be-tested signal to the signal input of the time measurement circuit. The conversion circuit is connected to the receiver and configured to receive the analog signal.

A fourth aspect provides an automation device including the LiDAR system of the third aspect.

A fifth aspect provides a time measurement method including: receiving, by a signal input, a to-be-tested signal, the signal input being connected to a first delay unit of a delay line including n delay units that are connected to a latch, the signal input being also connected to an input of a logic controller, an output of the logic controller being connected to a k-th delay unit of the delay line, k and n being positive integers, n>2, 1<k<n; in response to the to-be-tested signal being received by the first delay unit, sequentially transmitting, by the delay line, a first rising edge of the to-be-tested signal from the first delay unit to an n-th delay unit of the delay line, the first rising edge being a rising edge of the to-be-tested signal received by the first delay unit; in response to the to-be-tested signal being received at the input of the logic controller, sending, by the logic controller, a second rising edge of the to-be-tested signal to the k-th delay unit, and sequentially transmitting, by the delay line, the second rising edge of the to-be-tested signal from the k-th delay unit to the n-th delay unit of the delay line, the second rising edge being a rising edge of the to-be-tested signal received by the logic controller; after the second rising edge is transmitted to the k-th delay unit and before the first rising edge arrives at the k-th delay unit, sending, by the logic controller, a low-level signal to the k-th delay unit, and sequentially transmitting, by the delay line, the low-level signal from the k-th delay unit to the n-th delay unit; latching, by the latch, output signals of the n delay units

The present disclosure implements the TDC function through a special circuit, which reduces the dimension and the cost of the LiDAR system.

### BRIEF DESCRIPTION OF THE DRAWINGS

FIG. 1 is a schematic structural diagram of a delay-line-based time measurement chip.
FIG. 2 is a schematic structural diagram of a circuit for measuring time according to an example embodiment of the present disclosure.
FIG. 3 is a schematic structural diagram of a circuit for measuring time according to another example embodiment of the present disclosure.
FIG. 4 is a schematic structural diagram of a circuit for measuring time according to another example embodiment of the present disclosure.
FIG. 5 is a schematic structural diagram of a circuit for measuring time according to another example embodiment of the present disclosure.
FIG. 6 is a schematic structural diagram of a time measurement chip according to an example embodiment of the present disclosure.
FIG. 7 is a schematic structural diagram of a LiDAR system according to an example embodiment of the present disclosure.
FIG. 8 is a schematic structural diagram of an automation device according to an example embodiment of the present disclosure.
FIG. 9 is a flowchart of a method for measuring time according to an example embodiment of the present disclosure.

### DETAILED DESCRIPTION OF THE EMBODIMENTS

As indicated above, the TDC in the conventional LiDAR system is relatively large, which limits the application scenes.

To reduce the dimension of a LiDAR system, the present disclosure provides a special-purpose circuit to realize the function of a time-to-digital converter (TDC). As such, not only the dimension of the LiDAR system is reduced, but also the manufacturing cost of the LiDAR system is saved.

A clock frequency of a chip often ranges from MHz to GHz. That is, each clock cycle of the chip is at a nano-second level. The LiDAR system often needs to measure a receiving time of a received signal at the pico-second level. Thus, the receiving time of the received signal calculated directly based on a count value of the chip may have an error equal to the clock cycle of the chip. That is, the error of the receiving time of the received signal calculated directly based on the count value of the chip is an error at the nano-second level, which fails to meet the requirement for the time measurement accuracy in the LiDAR system.

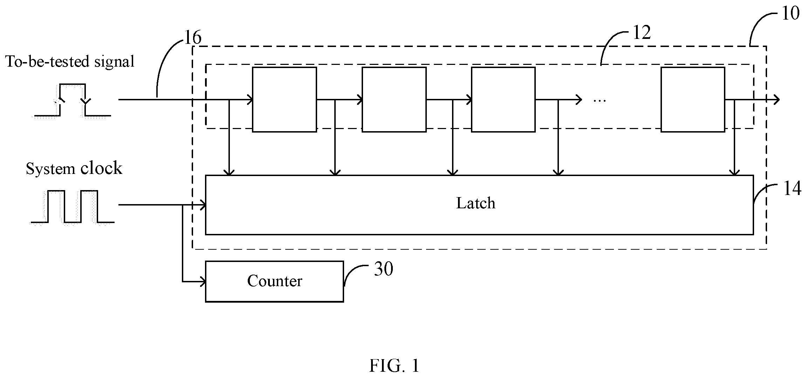

To increase the time measurement accuracy, a feasible solution is to build a delay line by using internal resources of the chip, to further divide the clock cycle at the nano-second level to obtain finer time sampling information. The delay-line-based time measurement solution is described below with reference to FIG. 1.

FIG. 1 is a schematic view of a delay-line-based time measurement chip according to an example embodiment of the present disclosure. As shown in FIG. 1, the chip includes a circuit 10 for measuring time (also referred to as a "time measurement circuit") and a counter 30.

The circuit 10 may be a special-purpose integrated circuit. The circuit 10 may be, for example, integrated in a field programmable gate array (FPGA) or an application specific integrated circuit (ASIC), which is not limited by the present disclosure. The circuit 10 includes a delay line 12, a latch 14, and a signal input 16.

The signal input 16 may be configured to receive a to-be-tested signal (signal for testing). For example, the to-be-tested signal may be a pulse signal having a low-level to high-level to low-level transition. The to-be-tested signal may be obtained by converting an analog signal by a conversion circuit (not shown in FIG. 1). Taking the LiDAR system as an example, the reflected signal received by the receiver of the LiDAR system is an analog signal. The analog signal is converted into a digital signal (the to-be-tested signal) by the conversion circuit (e.g., a comparator) before the receiving time of the analog signal is sampled. Then, the circuit 10 samples the receiving time of a rising edge of the to-be-tested signal. The receiving time of the rising edge of the to-be-tested signal reflects the receiving time of the reflected signal.

The delay line 12 includes a plurality of sequentially connected (or cascaded) delay units (i.e., sequentially connected small squares in FIG. 1). The plurality of delay units may be implemented by logic circuits of the chip. For example, the circuit 10 may be integrated in the FPGA chip. The plurality of delay units may be a plurality of carry chains and/or look-up tables (LUT) of the FPGA chip.

Further, the plurality of delay units of the delay line 12 may be located in a same slice of the FPGA chip or may be located in different slices of the FPGA chip. Arranging the delay line 12 in the same slice not only makes delay time of the delay line 12 more stable, but also simplifies wiring of the FPGA chip. The delay time of the delay unit is often between a few pico-seconds and a few hundred pico-seconds. The specific delay time of the delay unit can depend on types of the logic circuits forming the delay unit, manufacturers of the chip, and manufacturing processes of the chip, etc.

The latch 14 is configured to latch output signals of the plurality of delay units. The latch 14 may be, for example, implemented by registers of the chip. Each of the plurality of delay units of the delay line 12 is connected to a register in the latch 14. Taking the carry chain as the delay unit as an example, a CO terminal of each carry chain of the delay line 12 is connected to the register of the latch 14. When the output signal of the CO terminal of the carry chain is a high-level signal, the corresponding register latches the digital signal 1. When the output signal of the CO terminal of the carry chain is a low-level signal, the corresponding register latches the digital signal 0. Moreover, the delay line 12 and the latch 14 may be located in a same slice or may be located in different slices, which is not limited by the present disclosure. In some embodiments, the delay units and the latch are disposed in the same slice, such that the delays of the wirings between the delay units and the latch are more controllable.

The counter 30 counts the number of times that a clock signal triggers a system clock. In the time measurement chip, a count value of the counter 30 is defined as a coarse count Cᵣ, and a count time Cᵣ^{∗}T_{ck} of the system clock is defined as a coarse time, where T_{ck} is a clock cycle of the system clock. The error of the coarse time is equal to the clock cycle T_{ck} of the system clock. Because the highest clock cycle of the current chip often reaches the GHz level, the minimum error of the coarse time may be at the nano-second level.

It is assumed that the delay time of each delay unit of the delay line 12 is t_{d}. As shown in FIG. 1, after the to-be-tested signal is inputted into the delay line 12, in theory, the to-be-tested signal passes one delay unit every time the time t_{d} passes. When the rising edge of the system clock occurs, the latch 14 latches the output signal of each of the plurality of delay units of the delay line 12.

It is assumed that the rising edge of the to-be-tested signal is transmitted on the delay line 12 in the current clock cycle. A format of the digital signals latched in the latch 14 is often like this: "......111111110000......". As such, a fine time of the rising edge of the to-be-tested signal may be determined by calculating the number C₁ of "1"s latched in the latch 14 as: T_{rising} = Cᵣ^{∗} T_{ck} - C₁^{∗}t_{d}.

It is assumed that a falling edge of the to-be-tested signal is transmitted on the delay line 12 in the current clock cycle. A format of the digital signals latched in the latch 14 is often like this: "......0000000111111......". As such, the fine time of the falling edge of the to-be-tested signal may be determined by calculating the number C₂ of "0"s latched in the latch 14 as: T_{falling} = Cᵣ^{∗} T_{ck} - C₂^{∗}t_{d}.

As can be seen from the above description, the time measurement solution based on the delay line provides a finer measurement of the coarse time of the system clock to obtain finer time information of the to-be-tested signal. The error of the finer time information is often at the pico-second level.

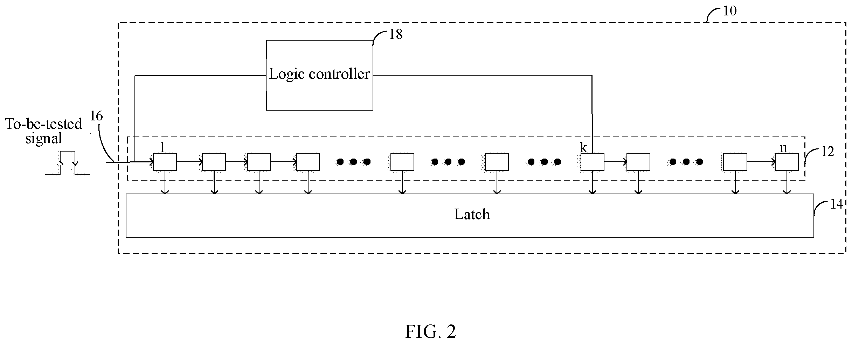

However, due to factors such as the manufacturing process and the operating environment, the time measured by the time measurement solution based on the delay line may be unstable, resulting in inaccuracy of the measured time obtained by the time measurement solution based on the delay line. To increase the accuracy of the time measurement, the structure of the circuit 10 may be further adjusted. The rising edge of the to-be-tested signal may be transmitted using different delay units of the delay line as starting points in one clock cycle, such that the rising edge of the to-be-tested signal may be sampled multiple times in one clock cycle to obtain a plurality of sampling results. Then, the plurality of sampling results may be averaged by a subsequent processing circuit, and the averaged value is determined to be the receiving time of the rising edge of the to-be-tested signal. The averaging operation makes the time information calculated by the circuit 10 more stable and more precise. The structure of the circuit 10 provided by the embodiments of the present disclosure is described in detail below with reference to FIG. 2.

As shown in FIG. 2, the circuit 10 for measuring time includes the delay line 12, the latch 14, the signal input 16, and a logic controller 18. The circuit 10 is configured to sample the time of a rising edge of the to-be-tested signal.

The signal input 16 is configured to receive the to-be-tested signal. The to-be-tested signal may be a pulse signal having a low-level to high-level to low-level transition. The to-be-tested signal may be obtained by converting an analog signal by a conversion circuit (not shown in FIG. 2). Taking the LiDAR system as an example, the reflected signal received by the receiver of the LiDAR system is an analog signal. The analog signal is converted into a digital signal (the to-be-tested signal) by the conversion circuit (e.g., a comparator) before the receiving time of the analog signal is sampled. Then, the circuit 10 samples the receiving time of the rising edge of the to-be-tested signal. The receiving time of the rising edge of the to-be-tested signal reflects the receiving time of the reflected signal.

The delay line 12 includes n delay units, where n is a positive integer larger than 2. The first delay unit of the delay line 12 is connected to the signal input 16 to receive the to-be-tested signal from the signal input 16. Before the to-be-tested signal arrives, the n delay units are in an initial state (i.e., a low-level state).

Further, the delay line 12 is configured to sequentially transmit a first rising edge from the first delay unit to the n-th delay unit in response to the to-be-tested signal being received by the first delay unit. The first rising edge is the rising edge of the to-be-tested signal received by the first delay unit. n is a positive integer, and n >2.

An input of the logic controller 18 is connected to the signal input 16 to receive the to-be-tested signal from the signal input 16. An output of the logic controller 18 is connected to the k-th delay unit of the delay line 12. k is a positive integer, and 1 < k < n.

The logic controller 18 is configured to transmit a second rising edge to the k-th delay unit in response to the to-be-tested signal being received by the input of the logic controller 18, such that the second rising edge is sequentially transmitted from the k-th delay unit to the n-th delay unit. The second rising edge is the rising edge of the to-be-tested signal received by the logic controller 18.

Both the first rising edge and the second rising edge are the rising edge of the to-be-tested signal. The difference is that the first rising edge starts propagating backward from the first delay unit of the delay line 12 while the second rising edge starts propagating backward from the k-th delay unit of the delay line 12.

As can be seen from the above description, the to-be-tested signal has two propagation starting points in the delay line 12, which are the first delay unit and the k-th delay unit, respectively. As such, the rising edge of the to-be-tested signal can appear at two different positions of the delay line 12, that is, the position where the first rising edge is located and the position where the second rising edge is located.

The second rising edge propagates backward from the k-th delay unit, such that the output signals of the delay units that the second rising edge passes changes from the low-level state to the high-level state. As the time progresses, the first rising edge is transmitted to the k-th delay unit. If the output signal of the k-th delay unit remains in the high-level state, it is impossible to sample the first rising edge. Thus, to sample the first rising edge by the k-th delay unit and the subsequent delay units, before the first rising edge reaches the k-th delay unit, the k-th delay unit and the subsequent delay units are sequentially reset to the low-level state.

Therefore, the logic controller 18 may further be configured to send a low-level signal to the k-th delay unit after the second rising edge is transmitted to the k-th delay unit and before the first rising edge is transmitted to the k-th delay unit. The low-level signal is sequentially transmitted from the k-th delay unit to the n-th delay unit.

After the logic controller 18 sends the low-level signal to the k-th delay unit, the low-level signal propagates backward starting from the k-th delay unit, such that the k-th delay unit and the subsequent delay units are sequentially reset to the low-level state to prepare for continuing to propagate the first rising edge.

The latch 14 is connected to the n delay units to latch the output signals of the n delay units. The latch 14 may be implemented by the registers of the chip. Specifically, each delay unit of the delay line 12 corresponds to one register of the latch 14. Taking the delay unit being the carry chain as an example, the CO terminal of each carry chain of the delay line 12 is connected to the corresponding register. When the output signal of the CO terminal of the carry chain is the high-level signal, the register latches the digital signal 1. When the output signal of the CO terminal of the carry chain is the low-level signal, the register latches the digital signal 0. The delay line 12 and the latch 14 may be located in a same slice or may be located in different slices, which is not limited by the present disclosure. In some embodiments, the delay units and the latch 14 are configured in a same slice, such that the delays of the wirings between the delay units and the latch 14 are more controllable.

The latch 14 outputs the latched signals to a subsequent processing circuit to calculate the receiving time of the rising edge of the to-be-tested signal. The operation of the processing circuit is described in detail below with reference to specific embodiments.

It should be noted that the value of n is not limited by the embodiments of the present disclosure. The value of n may be determined according to at least one of the following factors: a quantity of the delay units that the to-be-tested signal can pass in one clock cycle, the requirement for the time sampling precision of the circuit 10, the error tolerance range of the delay time of the delay units, and a quantity of the delay units between the first delay unit and the k-th delay unit. In one embodiment, the operating frequency of the system clock is about 200 MHz, and the clock cycle of the system clock is about 5 ns. It is assumed that the to-be-tested signal can pass at maximum 270 delay units in one clock cycle (i.e., 5ns), the first delay unit and the k-th delay unit are separated by 30 delay units, and n is equal to 300. As such, it is ensured that the rising edge of the to-be-tested signal is sampled twice in one clock cycle.

In some embodiments, n is configured, such that it takes no less than two clock cycles for the to-be-tested signal to pass the delay line 12. The circuit 10 samples the rising edge of the to-be-tested signal twice in one clock cycle. If n is configured such that it takes no less than two clock cycles for the to-be-tested signal to pass the delay line 12, the circuit 10 may sample the same to-be-tested signal more times. Thus, the average sampling result of the rising edge is more accurate.

In one embodiment, the operating frequency of the system clock is about 200 MHz, and the clock cycle of the system clock is about 5 ns. It is assumed that the to-be-tested signal can pass at maximum 270 delay units in one clock cycle (i.e., 5ns), the first delay unit and the k-th delay unit are separated by 30 delay units, and n is equal to 600. As such, it is ensured that the to-be-tested signal passes the delay line 12 in about two clock cycles. Because the rising edge of the to-be-tested signal is sampled twice in one clock cycle, n being equal to 600 can allow the circuit 10 to sample the rising edge of the same to-be-tested signal four times in two clock cycles, making the sampling result of the rising edge more accurate. To further improve the accuracy of time sampling, a larger value of n may be configured as long as the internal resources of the chip permit.

The value of k is not limited by the embodiments of the present disclosure. The smaller the value of k, the larger the number of the delay units are reused by the first rising edge and the second rising edge, and the lower the component cost of the delay line 12. However, the smaller the value of k, the closer the time distance between the first rising edge and the second rising edge, and the stronger the signal interference between the first rising edge and the second rising edge. Thus, the value of k may be determined by considering the above factors. In one embodiment, the value of k may be a number between 20 and 40. For example, the value of k can be determined to be 32.

The circuit for measuring time provided by the embodiments of the present disclosure reduces the dimension of the LiDAR system and saves the cost of the LiDAR system. Further, by using one delay line, the circuit for measuring time provided by the embodiments of the present disclosure samples the rising edge of the to-be-tested signal multiple times in one clock cycle. Thus, the subsequently calculated receiving time of the rising edge of the to-be-tested signal is more accurate.

In some embodiments, after the second rising edge is transmitted to the k-th delay unit and before the first rising edge is transmitted to the k-th delay unit, the logic controller 18 sends the low-level signal to the k-th delay unit, such that the k-th delay unit and the subsequent delay units are sequentially reset to the low-level state. It should be understood that there may be multiple ways to determine the timing for sending the low-level signal, which is not limited by the embodiments of the present disclosure.

In some embodiments, the logic controller 18 may use a timer to trigger sending the low-level signal. The timing length of the timer may be set to any time between the time the control logic unit 18 transmits the second rising edge to the k-th delay unit and the time the first rising edge is transmitted to the k-th delay unit. For example, the time that the first rising edge is transmitted to the k-th delay unit is estimated. The timing length of the timer is configured to be one half of the estimated time (at this time, the first rising edge is transmitted to approximately the middle between the first delay unit and the k-th delay unit).

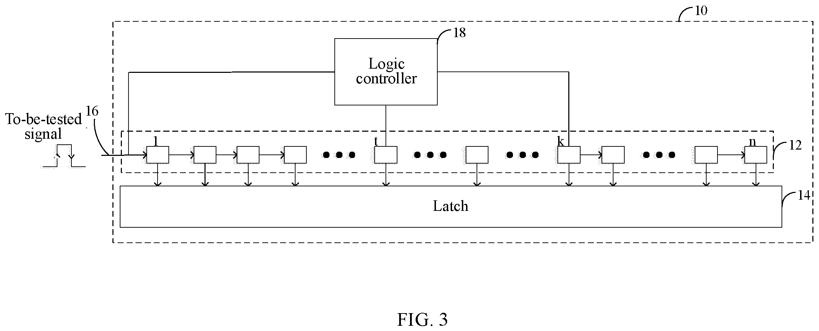

In some embodiments, as shown in FIG. 3, the input of the logic controller 18 may be connected to the t-th delay unit of the n delay units, where t is a positive integer, and 1 < t < k. The logic controller 18 is configured to send the low-level signal to the k-th delay unit in response to the first rising edge being transmitted to the t-th delay unit. It should be noted that the value of t is not limited by the embodiments of the present disclosure and may be any value between 1 and k.

In some embodiments, the logic controller 18 detects the output signal of the t-th delay unit. When the output signal of the t-th delay unit transitions from the low-level signal to the high-level signal, the logic controller 18 determines that the first rising edge has been transmitted to the t-th delay unit. Then, the logic controller 18 sends the low-level signal to the k-th delay unit, such that the k-th delay unit and the subsequent delay units are sequentially reset to the low-level state.

In the embodiments of the present disclosure, by detecting the state of the output signal of the t-th delay unit, a propagation position of the first rising edge of the delay line is obtained accurately. As such, the triggering timing of sending the low-level signal is selected more appropriately. In addition, the triggering timing of the low-level signal provided in the embodiments of the present disclosure may be determined through simple logic operation based on the state of the output signal of the t-th delay unit. Thus, it is straightforward to implement.

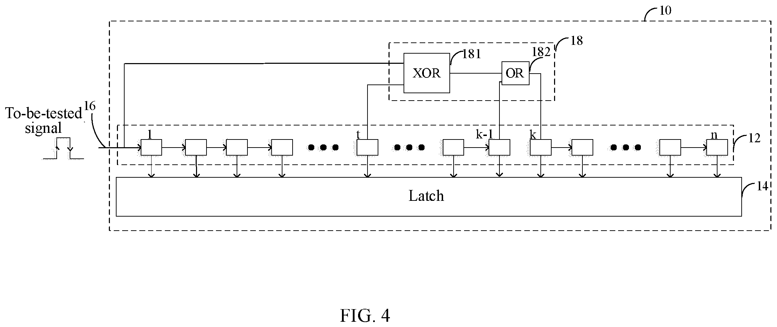

The structure of the logic controller 18 is not limited by the embodiments of the present disclosure, and may be any circuit capable of implementing the above functions. Taking integrating the circuit 10 in the FPGA chip as an example, the logic controller 18 may be implemented by one or more logic gate circuits of the FPGA chip or may be implemented directly by look-up tables (LUTs). One example of the implementations of the logic controller 18 is described in detail below with reference to FIG. 4.

As shown in FIG. 4, the logic controller 18 includes an exclusive OR circuit 181 (i.e., the XOR circuit in FIG. 4) and an OR circuit 182 (i.e., the OR circuit in FIG. 4). The input of the XOR circuit 181 is connected to the signal input 16 and the t-th delay unit. The input of the OR circuit 182 is connected to the output of the XOR circuit 181 and the (k-1)th delay unit of the delay line 12. The output of the OR circuit 182 is connected to the k-th delay unit. The circuits of the logic controller 18 provided by the embodiments of the present disclosure include a small number of components and is straightforward to implement.

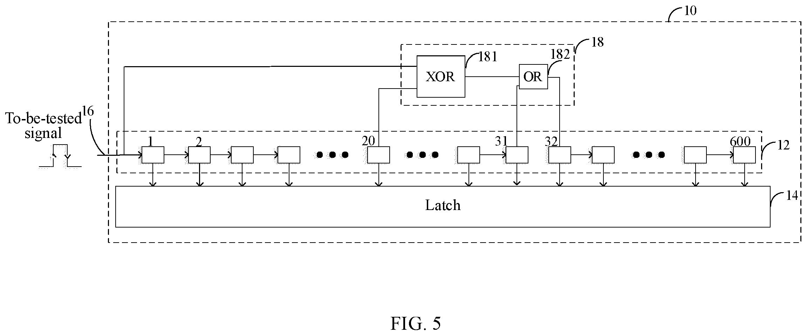

In some embodiments, referring to FIG. 5, assuming that k = 32, t = 20, the to-be-tested signal can pass at maximum 270 delay units in one clock cycle, and n = 600, the operating process of the logic controller 18 and the changing process of the states of the output signals of the delay units of the delay line 12 are described in detail below. FIG. 5 is intended to assist those skilled in the art to comprehend the embodiments of the present disclosure rather than limiting the embodiments of the present disclosure by the specific values or specific application scenarios. Based on the examples shown in FIG. 5, those skilled in the art may make various equivalent modifications or changes without departing from the scope of the present disclosure.

Phase 1: before the to-be-tested signal is inputted to the signal input 16, the states of the output signals of the 600 delay units are 0.

Phase 2: the rising edge of the to-be-tested signal arrives at the signal input 16, and the state of the output signal of the first delay unit changes from 0 to 1. In addition, the XOR circuit 181 causes the state of the output signal of the 32nd delay unit to change from 0 to 1. The states of the output signals of the remaining delay units of the delay line 12 temporarily remain 0.

Phase 3: when the first rising edge is transmitted to the 20th delay unit, the second rising edge arrives at the (32+X) delay unit, where X is equal to 19 in theory. However, due to the fluctuation of the manufacturing process, the value of X may fluctuate. For example, the value of X may fluctuate between 12 and 28. Because the first rising edge arrives at the 20th delay unit, the XOR circuit 181 causes the 32nd delay unit to start to transmit the low-level signal.

Phase 4: when the first rising edge is transmitted to the 31st delay unit, the OR circuit 182 causes the output signal of the 32nd delay unit to change from 0 to 1 and to start transmitting the first rising edge.

Taking the first 80 delay units of the delay line 12 as an example, the changing process of the states of the output signals of the first 80 delay units are mainly as follows:
when the to-be-tested signal has not arrived at the signal input 16: 0000000000000000000000000000000000000000000000000000000000000000000000000000;
when the to-be-tested signal arrives at the signal input 16: 1000000000000000000000000000000100000000000000000000000000000000000000000000;
when the first rising edge is transmitted to the 3rd delay unit of the delay line 12: 1110000000000000000000000000000111000000000000000000000000000000000000000000;
when the first rising edge is transmitted to the 20th delay unit of the delay line 12, the state of the output signal of the 32nd delay unit of the delay line 12 changes from 1 to 0 and starts transmitting the low-level signal: 1111111111111111111100000000000011111111111111111110000000000000000000000000;
when the first rising edge is transmitted to the 23rd delay unit of the delay line 12: 1111111111111111111111100000000000011111111111111111110000000000000000000000;
when the first rising edge is transmitted to the 32nd delay unit of the delay line 12: 1111111111111111111111111111111100000000000011111111111111111110000000000000;
when the first rising edge is transmitted to the 40th delay unit of the delay line 12: 1111111111111111111111111111111111111111000000000000111111111111111111100000.

As can be seen from the above process, under the control of the logic controller 18, at a same time, the delay line 12 includes two sampling positions of the rising edge. In addition, the delay line 12 has a length of 600, which is slightly larger than a maximum distance that the rising edge of the to-be-tested signal can be transmitted in two clock cycles. Thus, through the delay line 12, four sampling results of the rising edge of the to-be-tested signal may be obtained in two clock cycles. Then, the four sampling results may be averaged, and the averaged sampling result can be used as the final sampling result of the rising edge of the to-be-tested signal.

It should be noted that the circuit 10 is described as being applied to the LiDAR system. However, the present disclosure is not limited thereto. The circuit 10 may be applied to any scenarios where time sampling is required. The to-be-tested signal may have different physical meaning in different scenarios. However, the rising edge of the to-be-tested signal is sampled in a similar manner.

Further, the n delay units of the delay line 12 are cascaded together. That is, the n delay units are sequentially arranged in order. Any two adjacent delay units of the n delay units may be directly cascaded through signal lines or may be indirectly cascaded through other components. As shown in FIG. 4, the (k-1)th delay unit and the k-th delay unit of the delay line 12 are indirectly cascaded through the OR circuit 182.

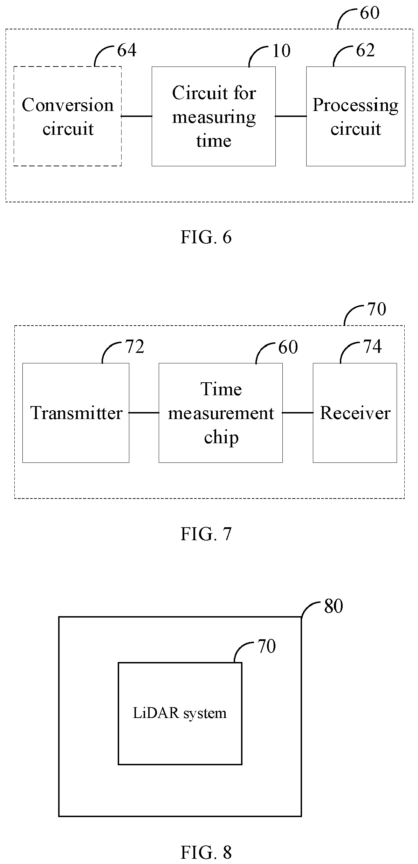

The present disclosure also provides a chip for measuring time. As shown in FIG. 6, the time measurement chip 60 includes the disclosed circuit 10 and a processing circuit 62.

The processing circuit is connected to the latch 14 of the circuit 10. The processing circuit 62 is configured to determine the time that the signal input receives the to-be-tested signal according to the output signals of the n delay units stored in the latch 14.

The processing circuit 62 performs functions such as rising edge detection and time calculation. The functions of the processing circuit 62 are described in detail below.

In some embodiments, the processing circuit 62 is configured to detect the positions of the first rising edge and the second rising edge of the delay line 12. The method for detecting the specific positions of the rising edge of the delay line includes: searching the states of the output signals of the delay units of the delay line 12 to find two positions where the states of the output signals change from 1 to 0. The two positions are the positions where the first rising edge and the second rising edge are located. Due to signal interferences or delay unit faults, the states of the output signals of the delay units may be erroneous (e.g., the state of the output signal of a certain delay unit should be 1, but the latch 14 incorrectly records 0 as the state of the output signal of the delay unit). In this case, the positions of the first rising edge and/or the second rising edge are incorrectly calculated. Thus, when detecting the positions of the first rising edge and/or the second rising edge, 1000 is detected as the state of the output signal (rather than the position corresponding to 10 as the detected state of the output signal). The accuracy of detecting the positions of the first rising edge and/or the second rising edge may be improved to certain extent.

Further, when the positions of the first rising edge and the second rising edge are detected, the processing circuit 62 may calculate the quantities of the delay units the first rising edge and the second rising edge pass in one clock cycle, respectively. As such, the receiving time corresponding to the first rising edge and the second rising edge are determined, respectively. The receiving time obtained in multiple measurements may be averaged. The averaged receiving time is the final result of the receiving time of the rising edge of the to-be-tested signal.

The specific structure of the processing circuit is not limited by the embodiments of the present disclosure. For example, the processing circuit may be implemented by the look-up tables (LUT) or may be implemented by other types of logic circuits of the chip.

In some embodiments, the time measurement chip 60 further includes a conversion circuit 64. The conversion circuit 64 is connected to the circuit 10. The conversion circuit 64 is configured to convert an analog signal to the to-be-tested signal in a pulse form, and to send the to-be-tested signal to the signal input 16 of the circuit 10.

The present disclosure also provides a LiDAR system. As shown in FIG. 7, the LiDAR system 70 includes a transmitter 72, a receiver 74, and the time measurement chip 60 as shown in FIG. 6. The transmitter 72 is configured to transmit a laser signal. The receiver 74 is configured to receive a reflected signal corresponding to the laser signal transmitted by the transmitter 72. The reflected signal is an analog signal. The conversion circuit 64 of the time measurement chip 60 is connected to the receiver 74, and is configured to receive the analog signal from the receiver 74.

The present disclosure also provides an automation device, such as a portable device. As shown in FIG. 8, the automation device 80 includes the LiDAR system 70 as shown in FIG. 7. Further, the automation device 80 includes a housing for holding the LiDAR system. For example, the automation device 80 may be an unmanned aerial vehicle, an unmanned ground vehicle, or a robot (such as a walking robot).

The device provided by the embodiments of the present disclosure has been described in detail with references to FIGs. 1-8. The method provided by the embodiments of the present disclosure is described in detail below correspondingly. Thus, omitted parts of the description may be referred to the previously described device embodiments.

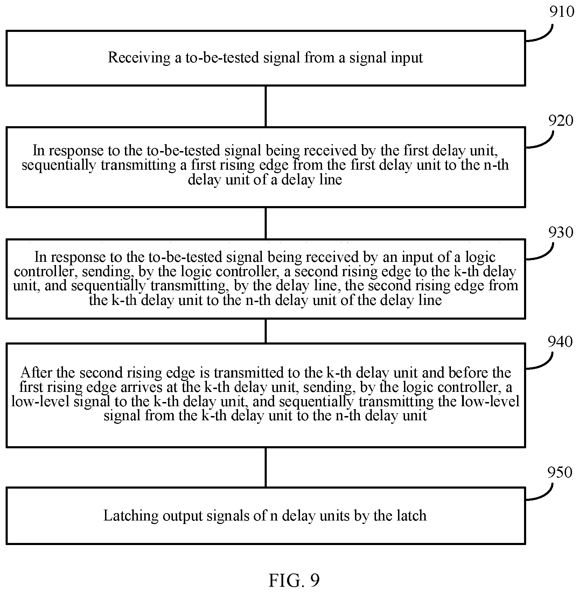

FIG. 9 is a flowchart of a method for measuring time according to an example embodiment of the present disclosure. The method of FIG. 9 may be executed by the previously disclosed circuit 10 for measuring time. The method of FIG. 9 may include steps 910-950. Details of the steps of FIG. 9 are described below.

At 910, a to-be-tested signal is received at a signal input. The signal input is connected to a first delay unit of a delay line. The delay line includes n number of delay units. The n delay units are connected to a latch. The signal input is also connected to an input of a logic controller. An output of the logic controller is connected to the k-th delay unit of the delay line, where k and n are positive integers, n > 2, and 1 < k < n.

At 920, in response to the to-be-tested signal being received by the first delay unit, a first rising edge is sequentially transmitted from the first delay unit to the n-th delay unit through the delay line, where the first rising edge is a rising edge of the to-be-tested signal received by the first delay unit.

At 930, in response to the to-be-tested signal being received by the input of the logic controller, the logic controller sends a second rising edge to the k-th delay unit, and the delay line sequentially transmits the second rising edge from the k-th delay unit to the n-th delay unit, where the second rising edge is a rising edge of the to-be-tested signal received by the logic controller.

At 940, after the second rising edge is transmitted to the k-th delay unit and before the first rising edge arrives at the k-th delay unit, the logic controller sends a low-level signal to the k-th delay unit, and the delay line sequentially transmits the low-level signal from the k-th delay unit to the n-th delay unit.

At 950, output signals of the n delay units are latched by the latch.

In some embodiments, the input of the logic controller is connected to the t-th delay unit of the n delay units, where t is a positive integer, and 1 < t < k. Process 930 may include, in response to the first rising edge being transmitted to the t-th delay unit, the logic controller sends the low-level signal to the k-th delay unit.

In some embodiments, the logic controller includes an XOR circuit and an OR circuit. An input of the XOR circuit is connected to the signal input and the t-th delay unit. An input of the OR circuit is connected to an output of the XOR circuit and the (k-1)th delay unit of the delay line, and an output of the OR circuit is connected to the k-th delay unit.

In some embodiments, the value of n is configured such that the time that the to-be-tested signal passes the delay line is not smaller than two clock cycles.

In some embodiments, the circuit for measuring time may be integrated in an FPGA chip or an ASIC chip.

In some embodiments, each of the plurality of delay units of the delay line includes at least one of a carry chain or a look-up table.

In some embodiments, the delay units of the delay line may be located in a same slice or different slices of the FPGA chip.

All or some embodiments of the present disclosure may be implemented in software, hardware, firmware, or combinations thereof. When being implemented in software, all or some embodiments of the present disclosure may be implemented in form of a computer program product. The computer program product includes one or more computer instructions. When being loaded and executed by a computer, the computer program instructions perform all or some steps or functions according to the flowcharts in the embodiments of the present disclosure. The computer may be a general-purpose computer, a special-purpose computer, a computer network, or other programmable devices. The computer program instructions may be stored in a computer readable storage medium or transferred from one computer readable storage medium to anther computer readable storage medium. For example, the computer program instructions may be transferred from one website, one computer, one server, or one data center to another website, another computer, another server, or another data center through wired (e.g., coaxial cable, optical fiber, digital subscriber line) or wireless (e.g., infrared, wireless, microwave, etc.) communication. The computer readable storage medium may be any suitable medium accessible by a computer or a data storage device including one or more suitable media, such as a server or a data center. The suitable medium may be a magnetic medium (e.g., a floppy disk, a hard disk, a magnetic tape), an optical medium (e.g., a DVD disk), or a semiconductor medium (e.g., an SSD drive).

Those of ordinary skill in the art may appreciate that various units or steps described in the embodiments of the present disclosure may be implemented by electronic hardware or a combination of computer software and electronic hardware. Whether the functions are performed by hardware or software depends on specific applications and design constraints of the technical solution. Those skilled in the art may use different methods to implement the described functions for each particular application. However, such implementation should be included within the scope of the present disclosure.

In the embodiments of the present disclosure, the disclosed system, device, and method may be implemented in other manners. For example, the device embodiments are merely illustrative. For example, the division of the units is only a logic function division. Other divisions may be possible in actual implementation. For example, a plurality of units or components may be combined or integrated to a different system. Some features may be omitted or may not be executed. Further, mutual coupling or direct coupling or communication connection as shown in the drawings or discussed in the description may be indirect coupling or communication connection through certain interfaces, devices, or units, and may be electrical, mechanical, or in other forms.

Units described as separate parts may or may not be physically separated. Components shown as units may or may not be physical units, that is, may be located in one place, or may be distributed to a plurality of network units. Some or all units may be selected according to actual requirements to achieve the objectives of the solution of the present disclosure.

In addition, various functional blocks of the embodiments of the present disclosure may be integrated in one processing module or circuit, or may be physically separate modules or circuits, or may have two or more functional blocks integrated in one module or circuit. The integrated module or circuit may be implemented in hardware or may be implemented in software functional modules. When being implemented in software functional modules and sold or used as an independent product, the integrated module may be stored in the computer readable storage medium.

## Claims

1. A time measurement circuit (10), comprising:
a signal input (16) configured to receive a to-be-tested signal;
a delay line (12) including n delay units that are sequentially connected, a first delay unit of the delay line (12) being connected to the signal input (16) to receive the to-be-tested signal from the signal input (16), the delay line (12) being configured to sequentially transmit a first rising edge of the to-be-tested signal received at the first delay unit from the first delay unit to an n-th delay unit of the delay line (12) in response to the to-be-tested signal being received by the first delay unit, and n being a positive integer larger than two; and
a latch (14) connected to the n delay units and configured to latch (14) output signals of the n delay units;
**characterized in that**
the time measurement circuit (10) further comprises a logic controller (18) including an input connected to the signal input (16) to receive the to-be-tested signal and an output connected to a k-th delay unit of the n delay units, the logic controller (18) being configured to send a second rising edge received at the input of the logic controller (18) to the k-th delay unit and to have the delay line (12) sequentially transmit the second rising edge from the k-th delay unit to the n-th delay unit in response to the to-be-tested signal being received at the input of the logic controller (18), and to send a low-level signal to the k-th delay unit and to have the delay line (12) sequentially transmit the low-level signal from the k-th delay unit to the n-th delay unit after the second rising edge is transmitted to the k-th delay unit and before the first rising edge arrives at the k-th delay unit, and 1<k<n.

2. The circuit (10) of claim 1, wherein:
the input of the logic controller (18) is further connected to a t-th delay unit of the n delay units, t being a positive integer larger than one and smaller than k;
the logic controller (18) is further configured to, in response to the first rising edge being transmitted to the t-th delay unit, send the low-level signal to the k-th delay unit.

3. The circuit (10) of claim 2, wherein the logic controller (18) includes:
an XOR circuit (181) including an input connected to the signal input (16) and the t-th delay unit;
an OR circuit (181, 182) including an input connected to an output of the XOR circuit (181) and a (k-1)-th delay unit of the delay line (12) and an output connected to the k-th delay unit.

4. The circuit (10) of any of claims 1-3, wherein a value of n is selected such that a time that the to-be-tested signal takes to pass through the delay line (12) is not smaller than two clock cycles.

5. The circuit (10) of any of claims 1-4, wherein the circuit (10) is integrated in an FPGA chip or an ASIC chip.

6. The circuit (10) of claim 5, wherein:
the circuit (10) is integrated in the FPGA chip;
each of the n delay units includes at least one of a carry chain or a look-up table,
wherein:
the circuit (10) is integrated in the FPGA chip;
the n delay units are located in a same slice or different slices of the FPGA chip.

7. A time measurement chip (60), comprising:
a time measurement circuit (10) of any of claims 1-6;
a processing circuit (62) connected to the latch (14) of the time measurement circuit (10) and configured to determine a time at which the signal input (16) receives the to-be-tested signal according to states of output signals of the n delay units stored in the latch (14).

8. The time measurement chip (60) of claim 7, further comprising:
a conversion circuit (64) connected to the time measurement circuit (10) and configured to convert an analog signal to the to-be-tested signal in a pulse form and transmit the to-be-tested signal to the signal input (16) of the time measurement circuit (10).

9. A light detection and ranging (LiDAR) system comprising:
a transmitter (72) configured to transmit a laser signal;
a receiver (74) configured to receive a reflected signal corresponding to the transmitted laser signal, the reflected signal being an analog signal;
the time measurement chip (60) of claim 8, wherein the conversion circuit (64) of the time measurement chip (60) is connected to the receiver (74) and configured to receive the analog signal.

10. An automation device (80) comprising:
the LiDAR system (70) of claim 9.

11. A time measurement method, comprising:
receiving, by a signal input (16), a to-be-tested signal, the signal input (16) being connected to:
a first delay unit of a delay line (12) including n delay units that are connected to a latch (14),
an input of a logic controller (18), an output of the logic controller (18) being connected to a k-th delay unit of the delay line (12), k and n being positive integers, n>2, 1<k<n;
in response to the to-be-tested signal being received by the first delay unit, sequentially transmitting, by the delay line (12), a first rising edge of the to-be-tested signal from the first delay unit to an n-th delay unit of the delay line (12), the first rising edge being a rising edge of the to-be-tested signal received by the first delay unit;
in response to the to-be-tested signal being received at the input of the logic controller (18), sending, by the logic controller (18), a second rising edge to the k-th delay unit, and sequentially transmitting, by the delay line (12), the second rising edge from the k-th delay unit to the n-th delay unit of the delay line (12), the second rising edge being a rising edge of the to-be-tested signal received by the input of the logic controller (18);
after the second rising edge is transmitted to the k-th delay unit and before the first rising edge arrives at the k-th delay unit, sending, by the logic controller (18), a low-level signal to the k-th delay unit, and sequentially transmitting, by the delay line (12), the low-level signal from the k-th delay unit to the n-th delay unit of the delay line (12);
latching, by the latch (14), output signals of the n delay units.

12. The method of claim 11, wherein:
the input of the logic controller (18) is further connected to a t-th delay unit of the n-th delay unit, t being a positive integer, and 1<t<k;
sending, by the logic controller (18), the second rising edge to the k-th delay unit in response to the to-be-tested signal being received at the input of the logic controller (18) includes sending;
sending, by the logic controller (18), the low-level signal to the k-th delay unit in response to the first rising edge being transmitted to the t-th delay unit.

13. The method of claim 12, wherein the logic controller (18) includes:
an XOR circuit (181) including an input connected to the signal input (16) and the t-th delay unit;
an OR circuit (181, 182) including an input connected to an output of the XOR circuit (181) and a (k-1)-th delay unit of the delay line (12) and an output connected to the k-th delay unit.

14. The method of any of claims 11-13, wherein a value of n is selected such that a time that the to-be-tested signal takes to pass through the delay line (12) is not smaller than two clock cycles.

15. The method of any of claims 11-14, wherein each of the delay units of the delay line (12) includes at least one of a carry chain or a look-up table,
wherein the delay units of the delay line (12) are located in a same slice or different slices of an FPGA chip.

## Patentansprüche

1. Zeitmessschaltung (10), die Folgendes umfasst:
einen Signaleingang (16), der dazu ausgelegt ist, ein zu testendes Signal zu empfangen;
eine Verzögerungsleitung (12), die n Verzögerungseinheiten beinhaltet, die sequenziell verbunden sind, wobei eine erste Verzögerungseinheit der Verzögerungsleitung (12) mit dem Signaleingang (16) verbunden ist, um das zu testende Signal vom Signaleingang (16) zu empfangen, wobei die Verzögerungsleitung (12) dazu ausgelegt ist, in Reaktion darauf, dass das zu testende Signal von der ersten Verzögerungseinheit empfangen wird und n eine positive Ganzzahl größer als zwei ist, eine erste ansteigende Flanke des zu testenden Signals, das an der ersten Verzögerungseinheit empfangen wird, sequenziell von der ersten Verzögerungseinheit zu einer n-ten Verzögerungseinheit der Verzögerungsleitung (12) zu übertragen, und
eine Verriegelung (14), die mit den n Verzögerungseinheiten verbunden und dazu ausgelegt ist, Ausgangssignale der n Verzögerungseinheiten zu verriegeln (14);
**dadurch gekennzeichnet, dass**
die Zeitmessschaltung (10) ferner eine Logiksteuerung (18), die einen Eingang beinhaltet, der mit dem Signaleingang (16) verbunden ist, um das zu testende Signal zu empfangen, und einen Ausgang, der mit einer k-ten Verzögerungseinheit der n Verzögerungseinheiten verbunden ist, umfasst, wobei die Logiksteuerung (18) dazu ausgelegt ist, in Reaktion darauf, dass das zu testende Signal am Eingang der Logiksteuerung (18) empfangen wird, eine zweite ansteigende Flanke, die am Eingang der Logiksteuerung (18) empfangen wird, an die k-te Verzögerungseinheit zu senden und zu bewirken, dass die Verzögerungsleitung (12) die zweite ansteigende Flanke sequentiell von der k-ten Verzögerungseinheit zur n-ten Verzögerungseinheit übertragen wird, und ein Niedrigpegelsignal an die k-te Verzögerungseinheit zu senden und zu bewirken, dass die Verzögerungsleitung (12) das Niedrigpegelsignal sequenziell von der k-ten Verzögerungseinheit zur n-ten Verzögerungseinheit überträgt, nachdem die zweite ansteigende Flanke zur k-ten Verzögerungseinheit übertragen wurde und bevor die erste ansteigende Flanke an der k-ten Verzögerungseinheit angekommen ist, und 1<k<n.

2. Schaltung (10) nach Anspruch 1, wobei:
der Eingang der Logiksteuerung (18) ferner mit einer t-ten Verzögerungseinheit der n Verzögerungseinheiten verbunden ist, wobei t eine positive Ganzzahl ist, die größer als eins und kleiner als k ist;
die Logiksteuerung (18) ferner dazu ausgelegt ist, in Reaktion darauf, dass die erste ansteigende Flanke zur t-ten Verzögerungseinheit übertragen wird, das Niedrigpegelsignal an die k-ten Verzögerungseinheit zu senden.

3. Schaltung (10) nach Anspruch 2, wobei die Logiksteuerung (18) Folgendes beinhaltet:
eine XOR-Schaltung (181), die einen Eingang beinhaltet, der mit dem Signaleingang (16) und der t-ten Verzögerungseinheit verbunden ist;
eine OR-Schaltung (181, 182), die einen Eingang beinhaltet, der mit einem Ausgang der XOR-Schaltung (181) und einer (k-l)-ten Verzögerungseinheit der Verzögerungsleitung (12) und einem Ausgang, der mit der k-ten Verzögerungseinheit verbunden ist, verbunden ist.

4. Schaltung (10) nach einem der Ansprüche 1-3, wobei ein Wert von n derart ausgewählt wird, dass eine Zeit, die das zu testende Signal zum Durchlaufen der Verzögerungsleitung (12) benötigt, nicht kleiner ist als zwei Taktzyklen.

5. Schaltung (10) nach einem der Ansprüche 1-4, wobei die Schaltung (10) in einen FPGA-Chip oder einen ASIC-Chip integriert ist.

6. Schaltung (10) nach Anspruch 5, wobei:
die Schaltung (10) in den FPGA-Chip integriert ist;
jede der n Verzögerungseinheiten mindestens eines von einer Übertragkette oder einer Nachschlagetabelle beinhaltet, wobei:
die Schaltung (10) in den FPGA-Chip integriert ist;
die n Verzögerungseinheiten sich in einer selben Scheibe oder in verschiedenen Scheiben des FPGA-Chips befinden.

7. Zeitmesschip (60), der Folgendes umfasst:
eine Zeitmessschaltung (10) nach einem der Ansprüche 1-6;
eine Verarbeitungsschaltung (62), die mit der Verriegelung (14) der Zeitmessschaltung (10) verbunden und dazu ausgelegt ist, eine Zeit zu bestimmen, zu der der Signaleingang (16) gemäß Zuständen von Ausgangssignalen der n Verzögerungseinheiten, die in der Verriegelung (14) gespeichert sind, das zu testende Signal empfängt.

8. Zeitmesschip (60) nach Anspruch 7, der ferner Folgendes umfasst:
eine Umwandlungsschaltung (64), die mit der Zeitmessschaltung (10) verbunden und dazu ausgelegt ist, ein analoges Signal in einer Impulsform in das zu testende Signal umzuwandeln und
das zu testende Signal zum Signaleingang (16) der Zeitmessschaltung (10) zu übertragen.

9. Lichtdetektions- und Entfernungsmess(LiDAR)-System, das Folgendes umfasst:
einen Sender (72), der dazu ausgelegt ist, ein Lasersignal zu übertragen;
einen Empfänger (74), der dazu ausgelegt ist, ein reflektiertes Signal, das dem übertragenen Lasersignal entspricht, zu empfangen, wobei das reflektierte Signal ein analoges Signal ist;
den Zeitmesschip (60) nach Anspruch 8, wobei die Umwandlungsschaltung (64) des Zeitmesschips (60) mit dem Empfänger (74) verbunden und dazu ausgelegt ist, das analoge Signal zu empfangen.

10. Automatisierungsvorrichtung (80), die Folgendes umfasst:
das LiDAR-System (70) nach Anspruch 9.

11. Zeitmessverfahren, das Folgendes umfasst:
Empfangen eines zu testenden Signals durch einen Signaleingang (16), wobei der Signaleingang (16) mit Folgendem verbunden ist:
einer ersten Verzögerungseinheit einer Verzögerungsleitung (12), die n Verzögerungseinheiten beinhaltet, die mit einer Verriegelung (14) verbunden sind,
einem Eingang einer Logiksteuerung (18), wobei ein Ausgang der Logiksteuerung (18) mit einer k-ten Verzögerungseinheit der Verzögerungsleitung (12) verbunden ist, wobei k und n positive Ganzzahlen sind, n>2, 1<k<n;
in Reaktion darauf, dass das zu testende Signal von der ersten Verzögerungseinheit empfangen wird, sequenzielles Übertragen einer ersten ansteigenden Flanke des zu testenden Signals durch die Verzögerungsleitung (12) von der ersten Verzögerungseinheit zu einer n-ten Verzögerungseinheit der Verzögerungsleitung (12), wobei die erste ansteigende Flanke eine ansteigende Flanke des zu testenden Signals ist, das von der ersten Verzögerungseinheit empfangen wird;
in Reaktion darauf, dass das zu testende Signal am Eingang der Logiksteuerung (18) empfangen wird, Senden einer zweiten ansteigenden Flanke durch die Logiksteuerung (18) zur k-ten Verzögerungseinheit und sequenzielles Übertragen der zweiten ansteigenden Flanke durch die Verzögerungsleitung (12) von der k-ten Verzögerungseinheit zur n-ten Verzögerungseinheit der Verzögerungsleitung (12), wobei die zweite ansteigende Flanke eine ansteigende Flanke des zu testenden Signals ist, das vom Eingang der Logiksteuerung (18) empfangen wird;
nachdem die zweite ansteigende Flanke zur k-ten Verzögerungseinheit übertragen wurde und bevor die erste ansteigende Flanke an der k-ten Verzögerungseinheit ankommt, Senden eines Niedrigpegelsignals durch die Logiksteuerung (18) zur k-ten Verzögerungseinheit und sequenzielles Übertragen des Niedrigpegelsignals durch die Verzögerungsleitung (12) von der k-ten Verzögerungseinheit zur n-ten Verzögerungseinheit der Verzögerungsleitung (12);
Verriegeln von Ausgangssignalen der n Verzögerungseinheiten durch die Verriegelung (14).

12. Verfahren nach Anspruch 11, wobei:
der Eingang der Logiksteuerung (18) ferner mit einer t-ten Verzögerungseinheit der n-ten Verzögerungseinheit verbunden ist, wobei t eine positive Ganzzahl und 1<t<k ist;
das Senden der zweiten ansteigenden Flanke durch die Logiksteuerung (18) an die k-te Verzögerungseinheit in Reaktion darauf, dass das zu testende Signal am Eingang der Logiksteuerung (18) empfangen wird, das Senden beinhaltet;
Senden des Niedrigpegelsignals durch die Logiksteuerung (18) an die k-te Verzögerungseinheit in Reaktion darauf, dass die erste ansteigende Flanke zur t-ten Verzögerungseinheit übertragen wird.

13. Verfahren nach Anspruch 12, wobei die Logiksteuerung (18) Folgendes beinhaltet:
eine XOR-Schaltung (181), die einen Eingang beinhaltet, der mit dem Signaleingang (16) und der t-ten Verzögerungseinheit verbunden ist;
eine OR-Schaltung (181, 182), die einen Eingang beinhaltet, der mit einem Ausgang der XOR-Schaltung (181) und einer (k-1)-ten Verzögerungseinheit der Verzögerungsleitung (12) und einem Ausgang, der mit der k-ten Verzögerungseinheit verbunden ist, verbunden ist.

14. Verfahren nach einem der Ansprüche 11-13, wobei ein Wert von n derart ausgewählt wird, dass eine Zeit, die das zu testende Signal zum Durchlaufen der Verzögerungsleitung (12) benötigt, nicht kleiner ist als zwei Taktzyklen.

15. Verfahren nach einem der Ansprüche 11-14, wobei jede der Verzögerungseinheiten der Verzögerungsleitung (12) mindestens eines von einer Übertragkette oder einer Nachschlagetabelle beinhaltet,
wobei sich die Verzögerungseinheiten der Verzögerungsleitung (12) in einer selben Scheibe oder in verschiedenen Scheiben eines FGGA-Chips befinden.

## Revendications

1. Circuit de mesure de temps (10), comprenant :
une entrée de signal (16) configurée de manière à recevoir un signal à tester ;
une ligne à retard (12) incluant « n » unités de retard qui sont connectées séquentiellement, une première unité de retard de la ligne à retard (12) étant connectée à l'entrée de signal (16) pour recevoir le signal à tester en provenance de l'entrée de signal (16), la ligne à retard (12) étant configurée de manière à transmettre séquentiellement un premier front montant du signal à tester reçu au niveau de la première unité de retard, de la première unité de retard à une n-ième unité de retard de la ligne à retard (12) en réponse au fait que le signal à tester est reçu par la première unité de retard, et « n » étant un nombre entier positif supérieur à deux ; et
un circuit à verrouillage (14) connecté aux « n » unités de retard et configuré de manière à verrouiller (14) des signaux de sortie des « n » unités de retard ;
**caractérisé en ce que** :
le circuit de mesure de temps (10) comprend en outre un contrôleur logique (18) incluant une entrée connectée à l'entrée de signal (16) pour recevoir le signal à tester, et une sortie connectée à une k-ième unité de retard des « n » unités de retard, le contrôleur logique (18) étant configuré de manière à envoyer un second front montant, reçu au niveau de l'entrée du contrôleur logique (18), à la k-ième unité de retard, et à amener la ligne à retard (12) à transmettre séquentiellement le second front montant, de la k-ième unité de retard à la n-ième unité de retard, en réponse au fait que le signal à tester est reçu au niveau de l'entrée du contrôleur logique (18), et à envoyer un signal de niveau bas à la k-ième unité de retard et à amener la ligne à retard (12) à transmettre séquentiellement le signal de niveau bas, de la k-ième unité de retard à la n-ième unité de retard, après que le second front montant a été transmis à la k-ième unité de retard et avant que le premier front montant n'arrive à la k-ième unité de retard, et où 1<k<n.

2. Circuit (10) selon la revendication 1, dans lequel :
l'entrée du contrôleur logique (18) est en outre connectée à une t-ième unité de retard des « n » unités de retard, « t » étant un nombre entier positif supérieur à un et inférieur à « k » ;
le contrôleur logique (18) est en outre configuré de manière à, en réponse au fait que le premier front montant a été transmis à la t-ième unité de retard, envoyer le signal de niveau bas à la k-ième unité de retard.

3. Circuit (10) selon la revendication 2, dans lequel le contrôleur logique (18) inclut :
un circuit OU exclusif (181) incluant une entrée connectée à l'entrée de signal (16) et à la t-ième unité de retard ;
un circuit OU (181, 182) incluant une entrée connectée à une sortie du circuit OU exclusif (181) et à une (k-1)-ième unité de retard de la ligne à retard (12), et une sortie connectée à la k-ième unité de retard.

4. Circuit (10) selon l'une quelconque des revendications 1 à 3, dans lequel une valeur de « n » est sélectionnée de sorte qu'un temps pris par le signal à tester pour franchir la ligne à retard (12) n'est pas inférieur à deux cycles d'horloge.

5. Circuit (10) selon l'une quelconque des revendications 1 à 4, dans lequel le circuit (10) est intégré dans une puce de réseau prédiffusé programmable par l'utilisateur, FPGA, ou une puce de circuit intégré à application spécifique, ASIC.

6. Circuit (10) selon la revendication 5, dans lequel :
le circuit (10) est intégré dans la puce FPGA ;
chacune des « n » unités de retard inclut au moins une chaîne de report ou une table de recherche ;
dans lequel :
le circuit (10) est intégré dans la puce FPGA ;
les « n » unités de retard sont situées dans une même tranche ou dans des tranches différentes de la puce FPGA.

7. Puce de mesure de temps (60), comprenant :
un circuit de mesure de temps (10) selon l'une quelconque des revendications 1 à 6;
un circuit de traitement (62) connecté au circuit à verrouillage (14) du circuit de mesure de temps (10) et configuré de manière à déterminer un temps auquel l'entrée de signal (16) reçoit le signal à tester selon des états de signaux de sortie des « n » unités de retard stockés dans le circuit à verrouillage (14).

8. Puce de mesure de temps (60) selon la revendication 7, comprenant en outre :
un circuit de conversion (64) connecté au circuit de mesure de temps (10) et configuré de manière à convertir un signal analogique en le signal à tester sous une forme d'impulsion et à transmettre le signal à tester à l'entrée de signal (16) du circuit de mesure de temps (10).

9. Système de détection et télémétrie par la lumière (LiDAR), comprenant :
un émetteur (72) configuré de manière à émettre un signal laser ;
un récepteur (74) configuré de manière à recevoir un signal réfléchi correspondant au signal laser émis, le signal réfléchi étant un signal analogique ;
la puce de mesure de temps (60) selon la revendication 8, dans lequel le circuit de conversion (64) de la puce de mesure de temps (60) est connecté au récepteur (74) et configuré de manière à recevoir le signal analogique.

10. Dispositif d'automatisation (80) comprenant :
le système LiDAR (70) selon la revendication 9.

11. Procédé de mesure de temps, comprenant les étapes ci-dessous consistant à :
recevoir, par le biais d'une entrée de signal (16), un signal à tester, l'entrée de signal (16) étant connectée à :
une première unité de retard d'une ligne à retard (12) incluant « n » unités de retard qui sont connectées à un circuit à verrouillage (14) ;
une entrée d'un contrôleur logique (18), une sortie du contrôleur logique (18) étant connectée à une k-ième unité de retard de la ligne à retard (12), « k » et « n » étant des nombres entiers positifs, où n>2, et 1<k<n ;
en réponse au fait que le signal à tester a été reçu par la première unité de retard, transmettre séquentiellement, par le biais de la ligne à retard (12), un premier front montant du signal à tester, de la première unité de retard à une n-ième unité de retard de la ligne à retard (12), le premier front montant étant un front montant du signal à tester reçu par la première unité de retard ;
en réponse au fait que le signal à tester a été reçu au niveau de l'entrée du contrôleur logique (18), envoyer, par le biais du contrôleur logique (18), un second front montant, à la k-ième unité de retard, et transmettre séquentiellement, par le biais de la ligne à retard (12), le second front montant, de la k-ième unité de retard à la n-ième unité de retard de la ligne à retard (12), le second front montant étant un front montant du signal à tester reçu par l'entrée du contrôleur logique (18) ;
après que le second front montant est transmis à la k-ième unité de retard, et avant que le premier front montant n'arrive à la k-ième unité de retard, envoyer, par le biais du contrôleur logique (18), un signal de niveau bas, à la k-ième unité de retard, et transmettre séquentiellement, par le biais de la ligne à retard (12), le signal de niveau bas, de la k-ième unité de retard à la n-ième unité de retard de la ligne à retard (12) ;
verrouiller, par le biais du circuit à verrouillage (14), des signaux de sortie des « n » unités de retard.

12. Procédé selon la revendication 11, dans lequel :
l'entrée du contrôleur logique (18) est en outre connectée à une t-ième unité de retard de la n-ième unité de retard, « t » étant un nombre entier positif, et 1<t<k ;
envoyer, par le biais du contrôleur logique (18), le second front montant à la k-ième unité de retard, en réponse au fait que le signal à tester a été reçu au niveau de l'entrée du contrôleur logique (18), ce qui inclut l'étape consistant à :
envoyer, par le biais du contrôleur logique (18), le signal de niveau bas, à la k-ième unité de retard, en réponse au fait que le premier front montant a été transmis à la t-ième unité de retard.

13. Procédé selon la revendication 12, dans lequel le contrôleur logique (18) inclut :
un circuit OU exclusif (181) incluant une entrée connectée à l'entrée de signal (16) et à la t-ième unité de retard ;
un circuit OU (181, 182) incluant une entrée connectée à une sortie du circuit OU exclusif (181) et à une (k-1)-ième unité de retard de la ligne à retard (12), et une sortie connectée à la k-ième unité de retard.

14. Procédé selon l'une quelconque des revendications 11 à 13, dans lequel une valeur de « n » est sélectionnée de sorte qu'un temps pris par le signal à tester pour franchir la ligne à retard (12) n'est pas inférieur à deux cycles d'horloge.

15. Procédé selon l'une quelconque des revendications 11 à 14, dans lequel chacune des unités de retard de la ligne à retard (12) inclut au moins une chaîne de report ou une table de recherche ;
dans lequel les unités de retard de la ligne à retard (12) sont situées dans une même tranche ou dans des tranches différentes d'une puce FPGA.
